# EUROPEAN PATENT SPECIFICATION

(11) **EP 2 110 755 B1**
(45) Date of publication and mention of the grant of the patent: **09.06.2010**
(21) Application number: 09152186.4
(22) Date of filing: 05.02.2009
(51) Int. Cl.: G06F 13/42

(54) **Data alignment and de-skew system and method for double data rate input data stream**
Datenausrichtung und Entzerrungssystem und -verfahren für Eingabedatenstrom mit doppelter Datenrate
Système d'alignement de données et d'élimination du biais et procédé pour un flux de données d'entrées à double vitesse de données

(30) Priority: 18.04.2008 US 105897
(43) Date of publication of application: 21.10.2009
(73) Proprietor: Honeywell International Inc., Morristown, NJ 07962 (US)
(72) Inventor: Caltagirone, Joseph Honeywell International Inc., Morristown, NJ 07962-2245 (US); Parker, James Dewey Honeywell International Inc., Morristown, NJ 07962-2245 (US)
(74) Representative: Buckley, Guy Julian

(56) References cited:
- WO-A-2007/143695
- DE-A1- 10 237 174
- US-A- 4 651 319
- US-A1- 2002 087 819
- US-A1- 2005 053 182
- US-B1- 7 230 549

## Description

### STATEMENT REGARDING FEDERALLY SPONSORED RESEARCH OR DEVELOPMENT

This invention was made with Government support under Subcontract TF0016 awarded by Lockheed Martin Space Systems Company. The Government has certain rights in this invention.

### TECHNICAL FIELD

The subject matter described herein generally relates to aligning streamed data, and more particularly relates to creating discrete data words and de-skewing serial data from a multiplexed input stream with both data and meta-data information.

### BACKGROUND

Streamed data can contain data bits, which form data words. Under certain circumstances, however, data bits associated with a particular clock cycle can be shifted to a different clock cycle at a receiving component, resulting in an unknown alignment of data bits or data words. As one example, the data bits forming the boundary of a certain data word can be offset from an accompanying synchronization or clock signal, resulting in misplaced data bits for the boundaries of the certain data word.

Misalignment of the data bits into incorrect data words can cause corruption in the data. One source of misalignment can be a difference in physical length between a wire transmitting the data stream and a wire transmitting the synchronization information. Alternatively, constantly changing delays through such wires, as a result, for example, of a change in environment, temperature, and supply voltage variation can offset the data and result in misaligned data and synchronization information or signals. Accordingly, it can be difficult to re-sync the data to form it into data words with the correct beginning and ending data bits.

Additionally, serial data transmitted as a stream of data bits can be skewed in time as compared to data transmitted in parallel. To de-skew data, a window of valid data, known as the data eye, must be found, which can require many clock cycles, depending on the number of bits in serial data devoted to indicating the beginning of a sequence of data.

The document US7230549 (D. E. woodral et A1.) discloses a system and a method for aligning bit streams. A pattern of sequential bit values (the comma symbol) is detected in the stream and used for the alignment.

### BRIEF SUMMARY

An apparatus is provided for a system for creating discrete data segments from a data stream. The system comprises a demultiplexing component adapted to bifurcate a double data rate (DDR) data stream into a first single data rate (SDR) data stream and a second SDR data stream, a bit detection component coupled to the demultiplexing component and adapted to compare bit values between the first and second SDR data streams and generate a first signal in response to detection of a predetermined arrangement of bits, a delay component adapted to receive the DDR data stream and perform a delay operation on the DDR data stream to create a delayed data stream, and a data alignment component coupled to the demultiplexing component, the delay component, and to the bit detection component, the data alignment component being adapted to place the delayed data stream in alignment in response to the first signal.

A method is provided for a method for processing data. The method comprises receiving a DDR data stream from a data source, demultiplexing the DDR data stream into first and second single data rate data streams, detecting a predetermined arrangement of bits in at least one of the first and second SDR data streams, transmitting a signal in response to detection of the sequence of bits, and aligning at least one of the DDR data stream, first SDR data stream, and second SDR data stream in response to the signal to create aligned data.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DESCRIPTION OF THE DRAWINGS

At least one embodiment of the present invention will hereinafter be described in conjunction with the following drawing figures, wherein like numerals denote like elements, and

FIG. 1 is a schematic diagram of a data processing system;

FIG. 2 is a timing diagram of an exemplary double data rate data stream including bit values;

FIG. 3 is a sequence diagram that illustrates the bit values of the double data rate data stream of FIG. 2;

FIG. 4 is a schematic representation of the demultiplexed bit values of the double data rate data stream of FIG. 3;

FIG. 5 is an illustration of an 8-bit tap with header information;

FIG. 6 is an illustration of an 8-bit data word with header information; and

FIG. 7 is a flow chart that illustrates an embodiment of a data processing method.

### DESCRIPTION OF AN EXEMPLARY EMBODIMENT

The following detailed description is merely exemplary in nature and is not intended to limit the application and uses of the subject matter. Furthermore, there is no intention to be bound by any expressed or implied theory presented in the preceding technical field, background, brief summary or the following detailed description.

Techniques and technologies may be described herein in terms of functional and/or logical block components and various processing steps. It should be appreciated that such block components may be realized by any number of hardware, software, and/or firmware components configured to perform the specified functions. For example, an embodiment of a system or a component, such as a data recording component or sequence detection component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments may be practiced in conjunction with any number of data transmission protocols and that the system described herein is merely one suitable example.

For the sake of brevity, certain conventional techniques related to signal processing, data transmission, signaling, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the subject matter.

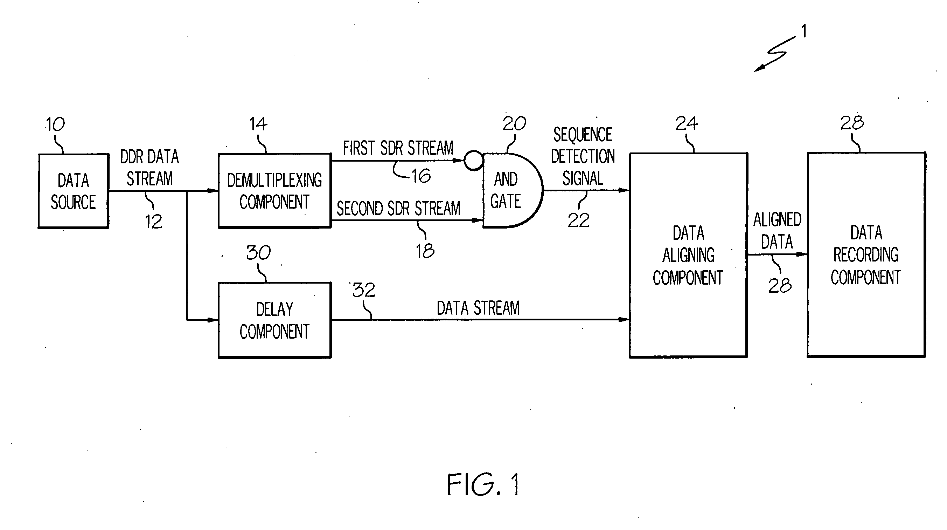

"Connected/Coupled" - The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one example arrangement of elements, additional intervening elements, devices, features, or components may be present in an embodiment of the depicted subject matter.

FIG. 1 illustrates an embodiment of a data processing system 1, which generally includes, without limitation: a data source 10, a demultiplexing component 14, an AND gate 20, a data aligning component 24, a data recording component 28, and a delay component 30. These elements are coupled together in an appropriate manner to accommodate the transfer of signals and data as needed to support the operation of system 1 as described herein. The system 1 can receive data from the data source 10. The data source 10 can be any component, system, or transmitting element adapted to transmit data using a double data rate (DDR) data stream. Accordingly, a DDR data stream 12 can be provided to the demultiplexing component 14. The demultiplexing component 14 can split, bifurcate, or otherwise process the DDR data stream 12 into two single data rate (SDR) data streams 16, 18. The first and second SDR data streams 16, 18 together can contain all of the data conveyed in the DDR data stream 12, in a de-coupled format, as later explained. The DDR data stream 12 can also be provided to the delay component 30, which can delay the bit sequence by a predetermined and/or adjustable number of bits.

The SDR data streams 16, 18 can operate on a synchronized or simultaneous clock, strobe, or other incremental signal. The SDR data streams 16, 18 can be provided to the AND gate 20, which is adapted to receive the data streams 16, 18 and inspect them for the presence of a predetermined bit value pair. As used herein, a "bit value pair" can be the value of two associated bits in the first and second SDR data streams 16, 18 transmitted by the demultiplexing component 14 during the same clock, strobe, or incremental signal. The AND gate 20 can be coupled to the data aligning component 24 and can, upon detection of a particular bit value pair, provide a sequence detection signal 22 to the data aligning component 24. In the illustrated embodiment, the sequence detection signal 22 conveys a sequence of logic high and low values. The data aligning component 24 can also receive a data stream 32 from the delay component 30. The data aligning component 24 can use the sequence detection signal 22 to de-skew the data or create discrete data segments, or data words, from the data stream 32, corresponding to the presence of the predetermined bit values detected by the AND gate 20 and indicated by the sequence detection signal 22. The data aligning component 24 can then provide aligned data 26 to the data recording component 28 for recordation and/or any appropriate use.

The data source 10 can be any source capable of providing a DDR data stream. Typically, such sources can include sensors, such as accelerometers, temperature sensors, video sensors, and the like, though other sources are contemplated. As one non-limiting example of another data source, a communication device may be transmitting DDR data and act as a data source.

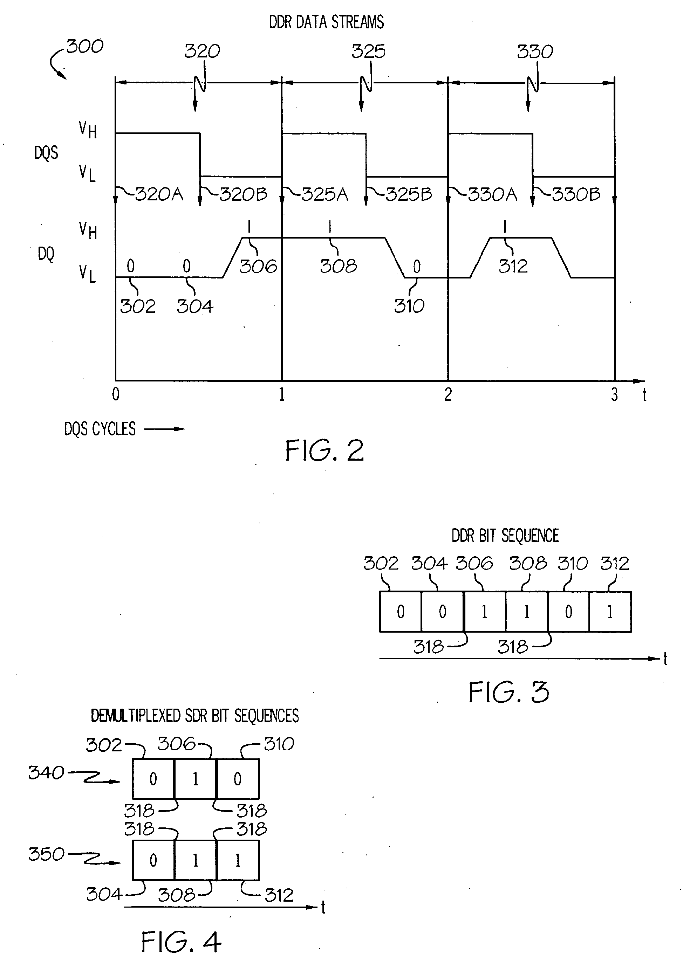

DDR data streams can contain bits transmitted in accordance with any suitable DDR specification or standard. With reference to FIG. 2, a DDR data stream 300 is shown. The DDR data stream 300 can include any or all of the signals described below, as well as additional signals. The term "Double Data Rate" refers to the speed at which bits of information are transmitted relative to the "strobe" signal, denoted as the "DQS" signal. A data signal, denoted as the "DQ" signal, is also transmitted. Each signal is shown as changing between two voltages, a respective low voltage "V_{L}" and a respective high voltage "V_{H}" (the signals may, but need not, have the same high voltage levels and the same low voltage levels).

Three successive DQS cycles 320, 325, 330 are shown. The x-axis can represent advancing time, as indicated by the *t* and associated directional arrow. The integers listed along the x-axis can represent the periods of the first, second, and third successive DQS cycles 320, 325, 330. For each regular DQS cycle, the DQ signal can be evaluated at the transition of the DQS cycle from a low to high voltage - known as the rising edge or first portion of the signal - and from a high to a low voltage - known as the falling edge or the second portion of the signal. The DQ signal can be examined for a value either at its V_{L} or its V_{H} voltages. A DQ signal with a V_{L} value can be recorded as a null or "0" bit, while a DQ signal at the V_{H} value can be recorded as a non-null or "1" bit. Thus, in FIG. 2, a 0 bit 302 followed by a second 0 bit 304 are associated with the first DQS cycle 320. The first 0 bit 302 is associated with the rising edge 320A of the first DQS cycle 320. The second 0 bit 304 is associated with the falling edge 320B of the first DQS cycle 320. Similarly, two 1 bits 306, 308 are associated with the second DQS cycle 325. The DQ signal can be examined at the rising 325A and falling 325B edges of the second DQS cycle 325 to determine the values of the two bits 306, 308. A 0 bit 310 and 1 bit 312 are associated with the third DQS cycle 330, along the first portion or rising edge 330A and the second portion or falling edge 330B, respectively. The particular bit values shown in FIG. 2 are merely used for purposes of this description. In practice, any suitable bit pattern can be conveyed in the DQ signal. The first bit 302 can be considered associated with the first portion of the first DQS cycle 320, as the DQ signal is examined during the rising edge 320A of the first DQS cycle 320. Similarly, the second bit 304 can be considered associated with the second portion of the first DQS cycle 320, as the DQ signal is examined during the falling edge 320B of the cycle.

In a Single Data Rate (SDR) signal, the DQ signal cycles at the same frequency as the DQS signal, resulting in only one bit per DQS cycle, as opposed to two bits per DQS cycle. Accordingly, a DDR data stream can transmit twice as many bits in the same number of DQS cycles as a SDR data stream.

The data source 10 can be configured to provide DDR data comprising two types of input information, data bits and meta-data bits, such as header or synchronization bits. The DDR data stream can comprise a constant stream of bits during both the first and second halves of the DQS cycle, with a measurement point in the DQ signal occurring twice during the cycle, allowing for the conveyance of one bit of information per "half" or portion of the DQS cycle.

With reference to FIG. 3, the values of the DQ signal of the data stream 300 of FIG. 2 are depicted in a sequence of bits. The bits from the DQ signal are listed in sequence, with separators 318 indicating the change of cycle in the DQS signal. Accordingly, the 0 bit 302 associated with the first portion of the first DQS cycle 320 appears as the first bit. Similarly, the 0 bit 304 associated with the second half of the first DQS cycle 320 appears as the second bit. The remaining bits 306, 308, 310, 312 appear in sequence. Additional bits would continue in sequence for additional DQS cycles beyond the third illustrated 330.

Returning to FIG. 1, the demultiplexing component 14 can be used to bifurcate, separate, or deinterleave the incoming DDR data stream 12 into two SDR data streams 16, 18. The demultiplexing component 14 can be adapted to adjust the DDR data steam using a plurality of methods. In some embodiments, a DDR data input is turned into a sequential SDR data stream, where bit information is transmitted on only one portion of a DQS signal. Because DDR data can be conveyed with both the first and second halves of a DQS clock cycle, such a resulting SDR data stream would have to operate at twice the DQS frequency in order to transmit the same amount of data in the same amount of time as the DDR data stream. Preferably, the demultiplexing component 14 can bifurcate the DDR data stream 12 into two parallel SDR data streams.

Selection of bits for generation of the SDR data streams 16, 18 can occur in any suitable manner. In some embodiments, the first and second SDR data streams can convey a number of sequential bits from the DDR data stream in an alternating manner, based on the same DQS cycle. As an example, with reference to FIG. 3, the first SDR data stream could sequentially comprise the bits 302, 304 associated with the first DQS cycle, while the second SDR data stream could sequentially comprise the bits 306, 308 associated with the second DQS cycle. Thus, for four input DDR bits, two output bits in each of two streams would be created over two DQS intervals, thereby preserving the data rate of the DDR input.

As described, any of several methods of bifurcating the DDR data stream can be used. FIG. 4 illustrates non-limiting exemplary output of a demultiplexed sequence 300. A first SDR data stream 340 contains a sequence of bits composed of the first of the two bits of information from each DQS cycle. Thus, the bit information from the first half of the first DQS cycle 320, a 0 bit 302, comprises the bit information for the first bit in the first SDR data stream 340. Similarly, the bit obtained from the first half of the second DQS cycle 325, a 1 bit 306, comprises the bit information for the second bit in the first SDR data stream 340, and can continue for as many bits as are present in the DDR data stream. Conversely, the bit information from the second half of the first DQS cycle signal 320, a 0 bit 304, comprises the first bit in the second SDR data stream 350, and so on.

Accordingly, the DDR data stream can be demultiplexed by creating two SDR data streams wherein the bit information for each SDR data stream is obtained from alternating halves of the DQS cycle of the DDR data stream. Thus, a first SDR data stream can comprise the bits associated with the first half of all DDR DQS cycles and a second SDR data stream can comprise the bits associated with the second half of all DDR DQS cycles. The selection of bits from certain halves of the DQS cycle and association with certain SDR data streams can be selected by the demultiplexing unit or a user, and neither necessarily corresponds to a particular data stream or half of a DQS cycle.

Thus, with reference back to FIG. 1, the first SDR data stream 16 can comprise only the bits from the first or second half of a DQS cycle. The other half of each DQS cycle can be provided to the second SDR data stream 18, thereby producing two SDR data streams at the same DQS frequency as the DDR data stream 12. In the illustrated example, the bits from first half of each DQS cycle comprise the first SDR data stream 16, while bits from the second half of each DQS cycle comprise the second SDR data stream 18. The DQS halves and corresponding SDR data streams can be different in different embodiments.

Thus, the DDR data stream 12 provided to the demultiplexing component 14 has been demultiplexed, split, or bifurcated by the demultiplexing component 14 into two SDR data streams 16, 18. The demultiplexing component 14 can be configured to generate the first and second SDR data streams 16, 18 such that a bit from each of two portions of the DDR DQS cycle exits the demultiplexing component 14 at the same clock or incremental signal in the parallel SDR data streams. Thus, if the first SDR data stream 16 comprises the bits from the first portion of each DQS cycle of the DDR data stream 12, and the second SDR data stream 18 comprises the bits from the second portion, the two bits from each DDR DQS cycle can be provided simultaneously along the first and second SDR data streams 16, 18. Accordingly, the AND gate 20 can detect or compare different portions of a single DQS cycle from the DDR data stream 12. The DDR data stream 12 can also be provided in an unaltered format to the delay component 30.

The first and second SDR data streams 16, 18 can be provided to the AND gate 20. Although an AND gate is used in the illustrated embodiment, other logical devices, such as OR, XAND, and XOR gates, as well as combinations thereof, both with and without delay components, can also be used. In FIG. 1, the AND gate 20 is configured to receive both the SDR data streams 16, 18 and respond to the detection of a predetermined bit pairing, or bit pair value. In accordance with known digital logic operations, the output of AND gate 20 will be a logic high value only when the first SDR data stream 16 is a logic low value and the second SDR data stream 18 is a logic high value; otherwise, the output of AND gate 20 will be a logic low value. As shown in the embodiment of FIG. 1, the AND gate 20 can be configured to register the presence of a 1 or non-null bit in the second SDR data stream 18 and the opposite, a 0 or null bit in the first SDR data stream 16, other gates and/or logical devices can be used, including reconfigurations of the AND gate illustrated to detect more or different bit sequences in the SDR data streams 16, 18. As one non-limiting example, only the first or second SDR data streams could be observed. In other embodiments, other components can be introduced, such as one or more delay components, as delay component 30, between the demultiplexing component 14 and the logical device or devices. In certain embodiments, the DDR data stream can be demultiplexed into more than two SDR data streams. Such embodiments could have different rates or frequencies of clock signals to maintain integrity of the data streams.

Because the data stream comprises a continuous sequence of bits, forming discrete data segments, called data words, is advantageous before attempting to perform data manipulation. To designate or demarcate the beginning and/or ending of data words, sequence information, preferably in a repeated pattern, can be transmitted by the data source 10 with a specified half of the DQS cycle. In some embodiments, the sequence information can be considered meta-data, synchronization, or flag bits, informing destination components as to the designated beginning or ending of data words, inherently conveying the size of each data word as well. Thus, in some embodiments, the bits associated with the first half of the DDR DQS cycle can provide, as one example, sensory data from the data source, and the bits associated with the second half of the DDR DQS cycle can contain bits which, either by their presence or in an appropriate pattern, can indicate the beginning and/or end of words consisting of the sensory data bits. Other embodiments can have different configurations of data and/or meta-data as advantageous for the particular embodiment.

In the illustrated embodiment, the AND gate 20 is adapted to receive the first and second SDR data streams 16, 18 and detect a predetermined bit pattern therein. As described above, the first SDR data stream 16 can be evaluated for the inverse of its bit value. Thus, a null bit can meet the condition of the AND gate 20, while a non-null bit does not. The particular bit pattern and/or length of the bit pattern can vary from system to system depending on the selection of logical devices used for detection. Different bit patterns can be utilized to signify different events, conditions, information, formations of data, and the like. In one non-limiting example, the AND gate 20 can determine when a null or 0 bit occurs in first SDR data stream 16 along with a corresponding non-null or 1 bit in the second SDR data stream 18. Such an occurrence can indicate the beginning or end of a data word in the second SDR data stream 18.

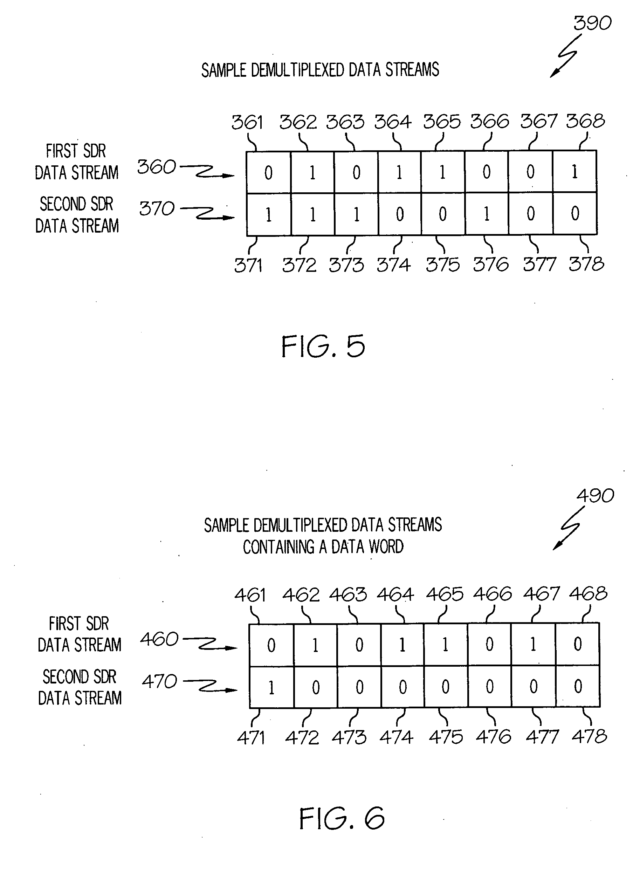

With reference to FIG. 5, sample streams 390 containing a tap, as described below, are shown. In the sample data streams 390, a first SDR data stream 360 contains a sequence of bits 361, 362, 363, 364, 365, 366, 367, 368, 369 which the data source generated and transmitted as a stream. In some embodiments, this bit sequence can originate from the bits associated with the first or second half of a DQS cycle of a DDR data stream. The bits from the second SDR data stream 360 can convey meta-data, a signal, or flag bits, such as the non-null or 1 bit 371, indicating the beginning or end of a tap in the first SDR data stream 370. In certain embodiments, the first and second SDR data streams 360, 370 can contain alternating sequential bits. Thus, in the illustrated pattern, the order of bits in the DDR data stream can be "0111011010010010", and demultiplexed into the alternating SDR data streams 360, 370 as shown. Specifically, the first bit in the DDR data stream is the first bit 361 in the first SDR data stream 360. The second bit in the DDR data stream is the first bit 371 in the second SDR data stream 370. The third bit in the DDR data stream is the second bit 362 in the first SDR data stream 360, and so forth. With reference to the embodiment illustrated in FIG. 1, the bits conveying a pattern indicating the beginning or end of a tap in a SDR data stream would correspond to the second SDR data stream 16 and could convey meta-data or synchronization information, and can be known as a header bit value pair.

FIG. 6 illustrates second sample data streams 490, wherein a data word is conveyed in the first SDR data stream 460, and the second SDR data stream 470 is used to contain header or meta-information. Unless indicated, the elements of FIG.6 are the same as those in FIG. 5 (e.g., bits occupying the same sequential position in a SDR data stream), except that the element number has been incremented by 100. In some embodiments, because the AND gate 20 of FIG. 1 is configured to detect the simultaneous presence of a 0 bit in the first SDR data stream 16 and a 1 bit in the second SDR data stream 18, the first SDR data stream 16 can be constrained to add a non-data flag bit to the front of the 8-bit data word, bit 0 461. Thus, the 8-bit data word contains a header bit pair 461, 471 indicative of the beginning of a data word or for use in de-skewing data. In those embodiments where data bits are only present on the first SDR data stream 460, the presence of such a sequence which the sequence detector is configured to detect can indicate the beginning and/or ending of a word in the first SDR data stream 460. The converse with the second SDR data stream 470 is also possible.

As one non-limiting example, in the embodiment illustrated in FIG. 1, the second SDR data stream 470 would correspond to the second SDR data stream 18, comprising the data from data source 10. As shown in FIG. 6, the bits of the first SDR data stream 470 can have the sequence 01011010. As can also be seen, the bits of the second SDR data stream 470 can have the sequence 10000000, indicating a null bit in the first portion of the first DQS cycle and a single meta-data or flag bit in the second portion of the first DQS cycle. Other sequences and placements are also possible.

With continued reference to FIG. 6, the pairing of a null bit 461 in the first SDR data stream 460 with the presence of a non-null bit 471 in the second SDR data stream 470 can indicate the beginning of a data word disposed in sequentially-alternating bit positions in the SDR data streams 460, 470, as described above. In some embodiments, the first bit in the data word 462 immediately follows the header bit in the first SDR data stream 460. Again, these bit patterns are generated by the data source 10, and are configured *a priori* to be detected by the AND gate 20.

Additionally, because the beginning and/or end of data words in a given SDR data stream can be signaled with a single header bit, the size of the data words in the data stream comprising sensory or other useful data can vary. One non-limiting example can include a set of sensory data corresponding to 8-bit data words, wherein the data word size is changed to 16 bits. The accompanying header bit pair 461, 471 can be detected at the beginning of the 16-bit data word without prior knowledge that the data word size has been doubled. Only after 16 data bits from the data streams 460, 470 have been received by the data aligning component 24 and another header bit pair indicating the start of the next data word can the data aligning component 24 determine the size of the previous data word.

Additionally, the header bit pair can also be placed at the end of a data word and used to indicate the end of one data word and the transition to the next. Similarly, if desired, a header bit pair can precede and terminate each data word, resulting in an overall increase of bits required to transmit an 8-bit data word to 10 bits to include those which designate the boundaries of an 8-bit word. Appropriate configuration of the data aligning component 24 or an analogous device can be used to manage the header bit usage, and preferable subsequent discarding of the header bit pair(s), thereby properly aligning the data. Accordingly, constant change in data word size can be accomplished with the header bit pair, accommodating even changes between successive data words, where the appropriate pattern or sequence can indicate the beginning and/or ending bits, allowing a component to align the data into data words properly.

Thus, preferably, the meta-data bits indicating the beginning or end of data words in a given data stream, such as the data stream 32, can be buffered or stored to synchronize the beginning and end of data words in a component, either as the sequence detection signal 22, or in another form. Preferably, the data bits from the data stream are additionally so buffered or stored. An exemplary embodiment is described with reference to FIG. 1, wherein the AND gate 20 detects the presence of a header bit pair indicating at least one of the boundaries of data words and conveys such location to the data aligning component 24 in the form of a sequence detection signal 22. The data aligning component 24 can store a variable number of bits conveyed in the data stream 32 for alignment into data words in response to the sequence detection signal 22.

In one non-limiting example, if the sequences from FIG. 6 were used in the system of FIG. 1, the data aligning component 24 would be informed of the start of a data word upon detection of the first header bit pair 461, 471 from the first and second SDR data streams 16/460, 18/470, but would be uninformed as to the total number of bits in the data word because the following data word's associated header bit pair had not yet been detected by the AND gate 20. Accordingly, the data aligning component 24 can be configured to record the sequence from the data stream 32 until informed as to the boundary for termination of the data word. After determining the bits both starting and ending the data word, the data aligning component 24 can form the data word, and, in some embodiments, flush the buffer in which the data bits were held to begin storage of data bits for the following data word.

The DDR data stream 12 can be supplied to a delay component 30. The delay component 30 can output a data stream 32, preferably after having delayed the bits from the DQS cycle portion of the data stream 32 by one or more DQ cycles as compared to the bits leaving the demultiplexing component 14. Accordingly, the AND gate 20 can examine one or more bit pairs on the first and second SDR data streams 16, 18 ahead of the data stream 32. Thus, generation of a sequence detection signal 22 can occur prior to the associated or indicated bit pattern of interest in the data stream 32. The data aligning component 24 can be configured to align the data correctly with *a priori* configuration as to the amount of delay created by the delay component 30.

The data stream 32 can be either a time-delayed version of the DDR data stream 12 or a demultiplexed portion thereof, wherein the delay component 30 additionally accomplishes demultiplexing while delaying the bits from the DDR data stream 12 from being transmitted as a data stream 32 for one or more DQS cycles. Accordingly, the data used to form data words by the data aligning component 24 can be SDR or DDR depending on the embodiment chosen. The data aligning component 24 can be configured to correctly designate the boundaries of the data words conveyed by the data stream 32 through correct association with the sequence detection signal 22.

With reference back to FIG. 1, the AND gate 20 can be adapted to receive the first and second SDR data streams 16, 18 and determine position of a header bit indicating the beginning or ending data words in the data stream 32 by performing the checking operation described above. The AND gate 20 can then transmit a sequence detection signal 22 which indicates the presence of the predetermined bit pattern or header bit.

The sequence detection signal 22 can be provided to the data aligning component 24. The sequence detection signal 22 can comprise information which indicates the presence of a header bit preceding the bit sequence arriving in the data stream 32, which must first pass through the delay component 30. As described, depending on the configuration of the AND gate 20 and data aligning component 24, the sequence detection signal 22 can be interpreted as any of several pieces of information useful to aligning streamed data into data words, such as the position in the stream of the first bit in a data word, the position of the last bit in a data word, and any combination thereof, as well as any other suitable information. Additionally, as the sequence detection signal 22 is preferably offset in time from the data stream because of the delay component 30, or for other processing or data transmission steps, the data aligning component 24 can be configured to properly synchronize the data from the data stream 32 with that associated sequence detection signal 22.

The data aligning component 24 can receive both the sequence detection signal 22 and the data stream 32. With both, the data aligning component 24 can then create data words from the data stream 32. Such data words, of constant or varying size, can comprise aligned data 26. The aligned data 26 can be provided to a data recording component 28, such as RAM or a hard disk for recordation and/or further processing.

In some embodiments, the AND gate 20, data aligning component 24, and data recording component 28 can be a single component. In other embodiments, other combinations, such as a combined data aligning and data recording component are also possible. In some embodiments, more components can be integrated, such as the demultiplexing component 14 and the AND gate 20. Thus, although illustrated as separate components, the elements of FIG. 1 can be integrated and/or combined as advantageous for practice of the system, such as comprising some portions of an integrated circuit.

In some embodiments, serial data is provided from the data source 10 in the form of the DDR data stream 12. Under certain circumstances, repetitive sequences of data sent through parallel lines can become skewed relative to each other. This occurs when variations in the line of transmission, owing to length, abnormalities, or transmitter processing speed, for example, alter the rates of transmission of serial data through the lines. With reference to FIG. 1, the data source 10 can be considered a source of such a serial data transmission. In the illustrated embodiment, the data source 10 would represent a single transmission of the data. Accordingly, the DDR data stream 12 can, under certain circumstances, be considered skewed data.

To de-skew the data, a group of bits known as a "data eye" can be located. The data eye is a group of bits furthest from the boundaries of the sequence of bits of interest, known as a tap. Thus, for each tap, a bit halfway or approximately halfway, between the beginning and end of the data eye is the center. As part of the de-skewing process, locating the data eye can be accomplished by sequencing the tap and determining its center. Additionally, by evaluating information regarding the boundaries between data taps, the data aligning component 24 can determine the center of each tap and align the data for useful processing and/or recording. Accordingly, designating the beginning or ending of taps can be useful for locating the data eye.

The system 1 can operate in two modes. During the first mode, or "training mode," a prepared DDR training data stream is provided to the demultiplexing component. The DDR training data stream is a prepared sequence of bits wherein a precise pattern occurs at intervals that determine the boundary between taps. In the illustrated embodiment, as the AND gate 20 is configured to transmit the sequence detection signal 22 when a 0 bit is detected from the first SDR data stream 16 with a corresponding 1 bit from the second SDR data stream 18. Thus, a DDR training data stream can be provided to the demultiplexing component 14 which contains this specific bit value pair with 8 complete bits between them. The data aligning component 24 can be configured to register transmission of the sequence detection signal 22 in response to the DDR training data stream. Accordingly, as a result of the "training" mode, the data aligning component 24 can determine a number of bits by which to offset the data stream 32 from the delay component 30 to properly frame the beginnings and ends of taps. Thereafter, the data aligning component 24 can buffer or store at least part of the data stream 32 and identify the beginning and end of taps in the data stream 32.

With reference to the exemplary data streams of FIG. 5, a training and normal operational sequence containing 8-bit taps will be described. During training, a training DDR data sequence having header bit value pairs after every 8 sequential bits can be provided to the demultiplexing component 14. Accordingly, during a clock cycle, the AND gate 20 will detect a header bit value pair with a null bit in the first data stream 16 and a non-null bit in the second SDR data stream 18. The following four clock cycles can contain the 8-bit tap, with two bits per clock cycle as is standard for DDR data streams, as described above. After the four clock cycles, another header bit value pair will be detected by the AND gate, and the sequence detection signal 22 will be transmitted to the data aligning component 24.

The data aligning component 24 can be adapted to determine that, based on the spacing of the header bit value pairs in the DDR data stream, 8-bit taps are being received, and can designate and store and/or transmit the bits properly into taps. Other tap sizes, such as 16-bit or 32-bit and so on can also be determined using an appropriate training pattern.

After several iterations, the DDR data stream 12, possibly containing skewed data, can be provided from the data source 10. The data aligning component 24 will receiving a transmission of the sequence detection signal 22 when a header bit value pair is detected by the AND gate 20. Having established the tap size during the training period, the data aligning component 24 can be adapted to form taps and determine the data eye of the data stream 32. In some embodiments, the data aligning component 24 can offset the beginning or ending by any number of clock cycles as influenced by the delay component 30. Additionally, in some embodiments, the data aligning component 24 or another controller component can adjust the delay component 30 to offset the data stream 32 by an appropriate number of clock cycles to better align the taps.

Under certain circumstances, the data in the first and second data streams 16, 18 which forms a part of the tap can transmit correct data in an arrangement so as to be disposed in the pattern detected by the AND gate 20. Under such circumstances, the sequence detection signal 22 will be transmitted to the data aligning component 24 prematurely, and too soon after the beginning of a tap to adequately indicate the beginning of the next tap or a boundary between successive taps.

In some embodiments, as a result of the information provided during the training period, the data aligning component 24 can be configured to continue to buffer and store data out to the expected number of clock cycles in anticipation of another sequence detection signal 22 indicating the actual header bit value pair. Accordingly, false positive transmissions of the sequence detection signal 22 can be ignored, and the taps properly framed.

In some embodiments, the data aligning component 24 can buffer and/or store even more clock cycles to determine, based on an analysis of a longer segment of the data stream 32, which bit value pairs, and their corresponding sequence detection signals 22, are correctly associated with the boundaries of taps, and which are the result of data occurring in the arrangement which causes transmission of the sequence detection signal 22. Accordingly, the data aligning component 24 can locate valid taps of regular sizes. Additionally, the data aligning component 24 can be further adapted to determine when a tap size has changed by fmding header bit value pairs which occur at a regular interval different than that which occurs during training. In some embodiments, the training mode can be omitted altogether, and the data aligning component 24 can be configured to determine the tap size based on regular occurrence of the header bit value pair as indicated by the sequence detection signal 22. The data aligning component 24 can be further configured to dynamically determine tap size, as varying based on frequency of occurrence of the header bit value pair which triggers the sequence detection signal 22 from the AND gate 20.

Thus, aligning data can be either forming data words as marked by the header bit value pair or determining the boundary of taps based on presence of the header bit value pair at regular intervals.

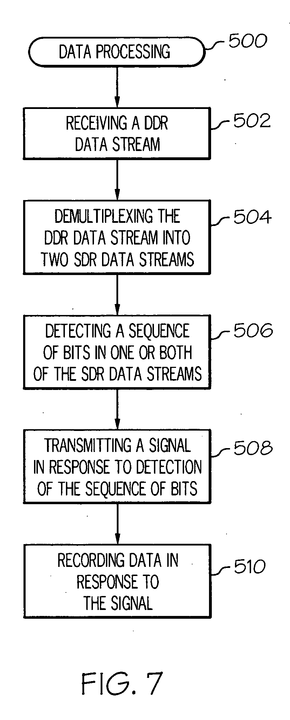

FIG. 7 is a flow chart that illustrates an embodiment of a data processing method 500. The various tasks performed in connection with method 500 may be performed by software, hardware, firmware, or any combination thereof. For illustrative purposes, the following description of method 500 may refer to elements mentioned above in connection with FIGS. 1-7. In practice, portions of method 500 may be performed by different elements of the described system, e.g., a data stream demultiplexing component 14, an AND gate 20 or other logical component, or a data recording component 28. It should be appreciated that method 500 may include any number of additional or alternative tasks, the tasks shown in FIG. 7 need not be performed in the illustrated order, and method 500 may be incorporated into a more comprehensive procedure or process having additional functionality not described in detail herein.

Initially, a DDR data stream can be received 502 by a demultiplexing component. The demultiplexing component can bifurcate the DDR data stream by demultiplexing 504 it into two SDR data streams. A sequence detection component can evaluate the bits of a first SDR data stream and second SDR data stream to detect 506 a bit pattern or sequence of bits on one or both of the data streams. Once a designated and/or predetermined sequence or data pair has been detected 506, such as a null bit in the first SDR data stream coinciding with a simultaneous non-null bit in the second SDR data stream, the data from a data stream, such as the first or second SDR data streams or the DDR data stream can be separated, divided, or aligned 508 into data words, of constant or varying size. In some embodiments, at least one of the data streams can be delayed by a delay component prior to aligning the data. The alignment performed during task 508 can be influenced and dictated by the predetermined sequence or bit pair detected 506 on the SDR data streams. Additionally, optionally, the data can be recorded 510 once it has been aligned 508.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims and the legal equivalents thereof.

## Claims

1. A system (1) for creating discrete data segments from a data stream comprising:
a demultiplexing component (14) adapted to bifurcate a double data rate (DDR) data stream (12) into a first single data rate (SDR) data stream (16) and a second SDR data stream (18);
a bit detection component (20) coupled to the demultiplexing component (14) and adapted to compare bit values between the first and second SDR data streams (16, 18) and generate a first signal (22) in response to detection of a predetermined arrangement of bits
a delay component (30) adapted to receive the DDR data stream (12) and perform a delay operation on the DDR data stream (12) to create a delayed data stream (32); and
a data alignment component (24) coupled to the delay component (30), and to the bit detection component (20), the data alignment component (24) being adapted to place the delayed data stream (32) in alignment in response to the first signal (22).

2. The system of Claim 1, wherein the DDR data stream (12) comprises a data signal and the first SDR data stream (16) comprises bits associated with a first portion of a data signal of the DDR data stream (12).

3. The system of Claim 2, wherein the second SDR data stream (18) comprises bits associated with a second portion of the data signal of the DDR data stream (12).

4. The system of Claim 3, further comprising a data recording component (28) coupled to the data alignment component (24) and adapted to record data in response to the first signal (22).

5. The system of Claim 4, wherein the data alignment component (24) is adapted to create aligned data (26), the aligned data (26) comprising data words.

6. The system of Claim 5, wherein the first signal (22) indicates the beginning of a data word in the delayed data stream (32).

7. A method for processing data comprising:
receiving (502) a double data rate (DDR) data stream (12) from a data source (10);
demultiplexing (504) the DDR data stream (12) into first and second single data rate (SDR) data streams (16, 18);
detecting (506) a bit value pair in the first and second SDR data streams (16, 18);
transmitting (508) a signal (22) in response to detection of the sequence of bits; and
aligning at least one of the DDR data stream (12), first SDR data stream (16), and second SDR data stream (18) in response to the signal to create aligned data (28).

8. The method of Claim 7, wherein detecting (506) a sequence of bits comprises comparing the value of a bit in the first SDR data stream and the value of a corresponding bit in the second SDR data stream to a predetermined bit sequence.

9. A method of de-skewing data comprising:
receiving (502) a double data rate (DDR) data stream (12) from a data source (10);
demultiplexing (504) the DDR data stream (12) into first and second single data rate (SDR) data streams (16, 18);
detecting (506) a bit value pair in the first and second SDR data streams (16, 18);
transmitting (508) a signal (22) to a data aligning component (24) in response to detection of the sequence of bits;
delaying at least one of the DDR data stream (12), the first SDR data stream (16), and the second SDR data stream (18), resulting in delayed data (32);
providing the delayed data (32) to the data aligning component (24); and
aligning data with the data aligning component (24) in response to the signal, thereby creating aligned data (26).

10. The method of Claim 9, further comprising recording (510) the aligned data.

## Patentansprüche

1. System (1) zum Erzeugen von diskreten Datensegmenten aus einem Datenstrom, umfassend:
eine demultiplexende Komponente (14), die dafür ausgelegt ist, einen Datenstrom (12) mit doppelter Datenrate (DDR) zu einem ersten Datenstrom (16) mit einzelner Datenrate (SDR) und einem zweiten Datenstrom (18) mit SDR aufzugabeln;
ein mit der demultiplexenden Komponente (14) gekoppelte Bitdetektionskomponente (20), die dafür ausgelegt ist, Bitwerte zwischen dem ersten und dem zweiten SDR-Datenstrom (16, 18) zu vergleichen und als Reaktion auf die Detektion einer vorbestimmten Anordnung von Bit ein erstes Signal (22) zu erzeugen,
eine Verzögerungskomponente (30), die dafür ausgelegt ist, den DDR-Datenstrom (12) zu empfangen und eine Verzögerungsoperation an dem DDR-Datenstrom (12) auszuführen, um einen verzögerten Datenstrom (32) zu erzeugen; und
eine mit der Verzögerungskomponente (30) und
mit der Bitdetektionskomponente (20) gekoppelte Datenausrichtungskomponente (24), wobei die Datenausrichtungskomponente (24) dafür ausgelegt ist, den verzögerten Datenstrom (32) als Reaktion auf das erste Signal (22) in Ausrichtung zu bringen.

2. System nach Anspruch 1, wobei der DDR-Datenstrom (12) ein Datensignal umfasst und der erste SDR-Datenstrom (16) Bit umfasst, die mit einem ersten Teil eines Datensignals des DDR-Datenstroms (12) assoziiert sind.

3. System nach Anspruch 2, wobei der zweite SDR-Datenstrom (18) Bit umfasst, die mit einem zweiten Teil des Datensignals des DDR-Datenstroms (12) assoziiert sind.

4. System nach Anspruch 3, ferner umfassend eine mit der Datenausrichtungskomponente (24) gekoppelte Datenaufzeichnungskomponente (28), die dafür ausgelegt ist, als Reaktion auf das erste Signal (22) Daten aufzuzeichnen.

5. System nach Anspruch 4, wobei die Datenausrichtungskomponente (24) dafür ausgelegt ist, ausgerichtete Daten (26) zu erzeugen, wobei die ausgerichteten Daten (26) Datenwörter umfassen.

6. System nach Anspruch 5, wobei das erste Signal (22) den Anfang eines Datenworts in dem verzögerten Datenstrom (32) anzeigt.

7. Verfahren zum Verarbeiten von Daten, mit den folgenden Schritten:
Empfangen (502) eines Datenstroms (12) mit doppelter Datenrate (DDR) von einer Datenquelle (10);
Demultiplexen (504) des DDR-Datenstroms (12) zu einem ersten und einem zweiten Datenstrom (16, 18) mit einzelner Datenrate (SDR);
Detektieren (506) eines Bitwertpaars des ersten und des zweiten SDR-Datenstroms (16, 18);
Senden (508) eines Signals (22) als Reaktion auf die Detektion der Sequenz von Bit; und
Ausrichten mindestens eines des DDR-Datenstroms (12), des ersten SDR-Datenstroms (16) und des zweiten SDR-Datenstroms (18) als Reaktion auf das Signal, um ausgerichtete Daten (28) zu erzeugen.

8. Verfahren nach Anspruch 7, wobei das Detektieren (506) einer Sequenz von Bit das Vergleichen des Werts eines Bit in dem ersten SDR-Datenstrom und des Werts eines entsprechenden Bit in dem zweiten SDR-Datenstrom mit einer vorbestimmten Bitsequenz umfasst.

9. Verfahren zum De-Skewing von Daten, mit den folgenden Schritten:
Empfangen (502) eines Datenstroms (12) mit doppelter Datenrate (DDR) von einer Datenquelle (10);
Demultiplexen (504) des DDR-Datenstroms (12) zu einem ersten und einem zweiten Datenstrom (16, 18) mit einzelner Datenrate (SDR);
Detektieren (506) eines Bitwertpaars in dem ersten und dem zweiten SDR-Datenstrom (16, 18);
Senden (508) eines Signals (22) zu einer Datenausrichtungskomponente (24) als Reaktion auf die Detektion der Sequenz von Bit;
Verzögern mindestens eines des DDR-Datenstroms (12), des ersten SDR-Datenstroms (16) und des zweiten SDR-Datenstroms (18), was zu verzögerten Daten (32) führt;
Leiten der verzögerten Daten (32) zu der Datenausrichtungskomponente (24); und
Ausrichten von Daten mit der Datenausrichtungskomponente (24) als Reaktion auf das Signal, um **dadurch** ausgerichtete Daten (26) zu erzeugen.

10. Verfahren nach Anspruch 9, ferner mit dem Schritt des Aufzeichnens (510) der ausgerichteten Daten.

## Revendications

1. Système (1) de création de segments de données discrets à partir d'un train de données comprenant:
un composant de démultiplexage (14) adapté pour bifurquer un train de données à double débit de données (DDR) (12) en un premier train de données à débit de données unique (SDR) (16) et un second train de données SDR (18) ;
un composant de détection de bits (20) couplé au composant de démultiplexage (14) et adapté pour comparer des valeurs de bits entre les premier et second trains de données SDR (16, 18) et générer un premier signal (22) en réponse à la détection d'une configuration de bits prédéterminée ;
un composant de retard (30) adapté pour recevoir le train de données DDR (12) et effectuer une opération de retard sur le train de données DDR (12) afin de créer un train de données retardé (32) ; et
un composant d'alignement de données (24) couplé au composant de retard (30), et au composant de détection de bits (20), le composant d'alignement de données (24) étant adapté pour aligner le train de données retardé (32) en réponse au premier signal (22).

2. Système selon la revendication 1, dans lequel le train de données DDR (12) comprend un signal de données et le premier train de données SDR (16) comprend des bits associés à une première partie d'un signal de données du train de données DDR (12).

3. Système selon la revendication 2, dans lequel le second train de données SDR (18) comprend des bits associés à une seconde partie du signal de données du train de données DDR (12).

4. Système selon la revendication 3, comprenant en outre un composant d'enregistrement de données (28) couplé au composant d'alignement de données (24) et adapté pour enregistrer des données en réponse au premier signal (22).

5. Système selon la revendication 4, dans lequel le composant d'alignement de données (24) est adapté pour créer des données alignées (26), les données alignées (26) comprenant des mots de données.

6. Système selon la revendication 5, dans lequel le premier signal (22) indique le début d'un mot de données dans le train de données retardé (32).

7. Procédé de traitement de données comprenant :
la réception (502) d'un train de données à double débit de données (DDR) (12) depuis une source de données (10) ;
le démultiplexage (504) du train de données DDR (12) en des premier et second trains de données à débit de données unique (SDR) (16, 18) ;
la détection (506) d'une paire de valeurs de bits dans les premier et second trains de données SDR (16, 18) ;
la transmission (508) d'un signal (22) en réponse à la détection de la séquence de bits ; et
l'alignement d'au moins l'un du train de données DDR (12), du premier train de données SDR (16) et du second train de données SDR (18) en réponse au signal pour créer des données alignées (28).

8. Procédé selon la revendication 7, dans lequel la détection (506) d'une séquence de bits comprend la comparaison de la valeur d'un bit dans le premier train de données SDR et de la valeur d'un bit correspondant dans le second train de données SDR à une séquence de bits prédéterminée.

9. Procédé de correction de désalignement de données comprenant :
la réception (502) d'un train de données à double débit de données (DDR) (12) depuis une source de données (10) ;
le démultiplexage (504) du train de données DDR (12) en des premier et second trains de données à débit de données unique (SDR) (16, 18) ;
la détection (506) d'une paire de valeurs de bits dans les premier et second trains de données SDR (16, 18) ;
la transmission (508) d'un signal (22) à un composant d'alignement de données (24) en réponse à la détection de la séquence de bits ;
le retard d'au moins l'un du train de données DDR (12), du premier train de données SDR (16) et du second train de données SDR (18), produisant des données retardées (32) ;
la fourniture des données retardées (32) au composant d'alignement de données (24) ; et
l'alignement des données avec le composant d'alignement de données (24) en réponse au signal, créant ainsi des données alignées (26).

10. Procédé selon la revendication 9, comprenant en outre l'enregistrement (510) des données alignées.
